## Europäisches Patentamt

## European Patent Office

## Office européen des brevets

(19)

(11) Veröffentlichungsnummer: **0 269 890**
**B1**

(12) # EUROPÄISCHE PATENTSCHRIFT

(45) Veröffentlichungstag der Patentschrift:
16.05.90

(51) Int. Cl.⁵: **F16F 3/08, B60K 5/12**

(21) Anmeldenummer: 87116154.3

(22) Anmeldetag: 03.11.87

(54) Tragfedersystem.

(30) Priorität: 03.11.86 DE 3637294

(43) Veröffentlichungstag der Anmeldung:
08.06.88 Patentblatt 88/23

(45) Bekanntmachung des Hinweises auf die Patenterteilung:
16.05.90 Patentblatt 90/20

(84) Benannte Vertragsstaaten:
DE FR GB IT

(56) Entgegenhaltungen:
EP-A- 0 118 887
CH-A- 268 622
DE-A- 1 903 237
DE-A- 3 439 614
DE-A- 3 608 934
DE-B- 1 110 475
DE-C- 836 418
DE-C- 860 878
FR-A- 817 656
FR-A- 1 327 065
FR-A- 1 453 835
GB-A- 915 093
US-A- 3 957 127

(73) Patentinhaber: WOCO Franz-Josef Wolf & Co.,
Sprudelallee 19, D-6483 Bad Soden-Salmünster(DE)

(72) Erfinder: Wolf, Franz Josef, Sprudelallee 19, D-6483 Bad
Soden-Salmünster(DE)
Erfinder: Pietsch, Hubert, Am Quellenrain 13,
D-6483 Bad Soden-Salmünster(DE)

(74) Vertreter: Jaeger, Klaus, Dipl.-Chem. Dr. et al, Jaeger,
Steffens & Köster Patentanwälte Pippinplatz 4a,
D-8035 München-Gauting(DE)

**Beschreibung**

Die Erfindung betrifft ein Tragfedersystem.

Insbesondere betrifft die Erfindung ein Federsystem mit einer weichen, als Zugfeder oder als Druckfeder ausgebildeten Tragfeder.

Weiche Tragfedern mit einer weiten flachen linearen Federkennlinie sind für zahllose Anwendungen die theoretisch idealen Lager oder Aufhängungen. Ihr Einsatz in der Praxis scheitert dann jedoch fast immer an den zu weiten Federwegen, der damit verbundenen hohen Materialbelastung, der ein weiches Tragfedermaterial, sei dies nun ein Federstahl oder ein Elastomer, nicht strandhält, sowie an dem zu harten Wirksamwerden notwendiger, als Federwegbegrenzer wirkender Anschläge.

Entsprechendes gilt für steifere und mechanisch durchaus festere Tragfedern unter großer, insbesondere dynamischer Belastung.

Aus der GB-A 915 093 ist ein Stoßdämpfer bekannt, der aus zwei Federelementen, nämlich einer radial vorgespannten Gummischeibe und einer axialen Spiralfeder besteht, wobei die Spiralfeder an die Gummischeibe in deren radial mittleren Bereich angekoppelt ist, so daß sich die Federkennlinie des gesamten Dämpfers additiv aus der Kennlinie der beiden Federelemente zusammensetzt. Durch die radiale Vorspannung weist die Gummischeibe eine instabile Mittellage und zwei stabile Endlagen ober- und unterhalb dieser Mittellage auf, wobei die Federkonstante der Gummischeibe im Bereich der labilen Mittellage annähernd Null ist, d.h. daß in diesem Bereich die Auflast nahezu ausschließlich von der Spiralfeder aufgenommen wird. Nachteilig bei diesem bekannten Stoßdämpfer ist, daß insbesondere bei Verwendung einer weichen Tragfeder, wie sie für viele Anwendungen erwünscht ist, lange Federwege auftreten, die zu einer Überdehnung der Gummischeibe und damit zu einer Zerstörung oder Verringerung der Stanzzeit des Dämpfers führen.

Der Erfindung liegt die Aufgabe zugrunde, ein Tragfedersystem zu schaffen, das bei insbesondere weicher und/oder hochbelasteter Tragfeder eine hohe mechanische Standfestigkeit und Lebensdauer, auch bei dynamischer Belastung, aufweist und deren Federwegbegrenzung an den Grenzen des linearen Arbeitsbereichs weich und ohne Anschlagcharakteristik einsetzt, ohne dazu weiche Anschlagpuffer einsetzen zu müssen, die wiederum einer überhöhten Anforderung an ihre Standfestigkeit ausgesetzt wären.

Diese Aufgabe wird von einem Tragfedersystem gelöst, welches die Merkmale gemäß Anspruch 1 aufweist.

Dieses Tragfedersystem der Erfindung weist zwei wesentliche und prinzipielle Vorteile auf: (1) Die Steuerfeder kann von hoher und höchster mechanischer Festigkeit sein und vermag so eine weiche Tragfeder effektiv zu schützen, ohne in ihrem labilen Kennlinienbereich die Kennlinie der Tragfeder im angekoppelten Kennlinienbereich beachtlich zu verändern; und (2) von einem überdehnten Endbereich, über den stabilen Endbereich, durch den labilen Zwischenbereich mit praktisch verschwindender Federkonstante, den anschließenden Rückstellbereich der Steuerfeder in die zweite stabile Endlage und den daran anschließenden zweiten Überdehnungsbereich weist die im Tragfedersystem der Erfindung verwendete Steuerfeder eine Federkennlinie auf, die im Tragfedersystem additiv zur Kennlinie der Tragfeder wirkt, so daß dem Konstrukteur eines Tragfedersystems nach den Prinzipien der Erfindung durch eine entsprechende Wahl des Arbeitsabschnittes auf der Federkennlinie der Steuerfeder eine praktisch unbegrenzte Vielfalt der Kennliniengestaltung für ein Tragfedersystem an die Hand gegeben ist.

Vorzugsweise wird die Steuerfeder jedoch so eingesetzt, dass, jeweils bezogen auf die Federauslenkung, der zwischen den beiden stabilen Endlagen der Steuerfeder liegende labile Neutralbereich im, meist linearen, Arbeitsbereich der Tragfeder liegt. Für die Realisierung eines solchen Tragfedersystems steht dem Fachmann in ohne weiteres erkennbarer Weise eine Vielzahl von möglichen Federkombinationen zur Verfügung. Vorzugsweise ist das Tragfedersystem so ausgebildet, dass die Tragfeder eine Druck- oder Zugfeder ist, und dass die Steuerfeder eine radial zur Tragfeder vorgespannte Druck- oder Augfeder oder eine Druck- oder Zugfederkombination aus mehreren einzelnen Druck- oder Zugfedern, mit oder ohne zwischengeschalteten Hebelsystemen, oder eine Tellerfeder, oder eine bistabile Blattfeder, ist.

Insbesondere, wenn das Tragfedersystem als Axiallager oder Auflager eingesetzt werden soll, ist die Tragfeder vorzugsweise ein Gummipuffer, an dessen Auflastträger eine unter radialer Kompression mit ortsfestem Widerlager vorgespannte Gummischeibe oder Gummitellerfeder zentral angebunden ist.

Vor allem, wenn der als Tragfeder dienende Gummipuffer aus einem besonders weich eingestellten Elastomer besteht oder als Lochgummifeder ausgebildet ist, wird bei entsprechender Vorspannung der Steuerfeder ein extrem weiches, gleichzeitig aber extrem stabiles und mechanisch festes Auflager erhalten, das, bei entsprechend ausgelegter Debhnbarkeit der Steuerfeder, aus dem linearen Tragfederarbeitsbereich weich und ohne Anschlagscharakteristik in einen begrenzenden Progressionsbereich übergeht.

Die Steuerfeder ist jedoch nicht nur in der Lage, die Federkennlinie und das Federverhalten der Tragfeder bei axialer Last steuernd zu beeinflussen, sondern kann auch in einfacher Weise durch entsprechende asymmetrische Gestaltung auftretende asymmetrische Radialkräfte kompensieren. Dabei stehen auch zu einer solchen Kompensation von Radialkräften dem Fachmann wiederum ohne weiteres zahlreiche Möglichkeiten der Realisierung zur Verfügung. Besonders einfach ist eine differenzierte Kompensation von Radialkomponenten bei Verwendung einer komprimierten Gummischeibe als Steuerfeder dadurch möglich, dass die Gummifederscheibe in axialer Richtung mit Aussparungen, Ausnehmungen, Kanälen oder öffnungen versehen ist, die die Rückstellkraft der Gummisteuerfederscheibe in radialer Richtung der Verteilung der Ausnehmungen entsprechend schwächen, wobei diese Ausnehmungen, Aussparungen, Kanäle oder öffnungen sowohl beidseitig offen, also durchgehend, als auch einseitig geschlossen, ausgebildet sein können. Auch kann eine Asymmetrie der radialen Steuerfederkräfte in einfacher Weise durch unterschiedlich dicke Ausbildung der Gummifedersteuerscheibe erreicht werden.

Für Anwendungen, bei denen sowohl eine weiche Tragfeder, als auch eine nicht allzu steife Steuerfeder benötigt werden, um eine vorgegebene Kennlinie für ein Tragfedersystem zu realisieren, ist der Federweg der Steuerfeder in, bezogen auf die Tragfeder, axialer Richtung unter Verwendung von federwegbegrenzenden Anschlägen begrenzt. Durch die nur mittelbare und anteilige Auswirkung eines solches Steuerfederbegrenzers auf die Kennlinie des gesamten Tragfedersystems bleiben solche Begrenzungsanschläge für die meisten Anwendungsfälle unkritisch. Bei Verwendung von scheibenförmigen oder tellerförmigen Steuerfedern sind diese Steuerfederwegbegrenzer vorzugsweise als Scheiben ausgebildet, die oberhalb und unterhalb der Steuerfeder und zumindest im wesentlichen parallel zu dieser am Auflastträger der Tragfeder starr oder elastisch befestigt sind.

Steuerfederwegbegrenzer sind auch dann vorgesehen, wenn nach einer weiteren Ausgestaltung der Erfindung die Steuerfeder eine unter radialer Vorspannung stehende, bezogen auf das Lager radial angeordnete kreisringscheibenförmige Scheibenfeder aus einem elastomeren Werkstoff ist, die die weiche Tragfeder des Lagers peripher umschliessend angeordnet ist. Bei dieser Anordnung der Steuerfeder ist die Tragfeder vorzugsweise in einem zweiteiligen Lagergehäuse angeordnet, dessen beide Gehäuseteile topfartig oder glockenförmig ausgebildet sind und einander axial mit Spiel so übergreifen, dass die Steuerfeder zwischen den beiden einander überlappenden Mantelwänden der beiden Gehäuseteile eingespannt ist. Die Steuerfederwegbegrenzer sind dann bei dieser Ausgestaltung des Lagers vorzugsweise unmittelbar in den bzw. aus den Lagergehäusewandflächen ausgeformt.

Die Erfindung ist im folgenden anhand eines Ausführungsbeispiels in Verbindung mit den Zeichnungen näher erläutert.

Es zeigen:

Fig. 1 im schematischen Axialschnitt ein Ausführungsbeispiel des Tragfedersystems, und zwar links der Mittellinie unter statischer Sollast sowie rechts der Mittellinie im unbelasteten Zustand;

Fig. 2 das Kennlinienfeld einer Steuerfeder der in Fig. 1 gezeigten Art;

Fig. 3 die Kennlinie einer weichen Gummitragfeder der in Fig. 1 gezeigten Art; und

Fig. 4 die Kennlinie eines Tragfedersystems der in Fig. 1 gezeigten Art als Addition einer Steuerfederkennlinie der in Fig. 2 gezeigten Art und einer Tragfederkennlinie der in Fig. 3 gezeigten Art; sowie

Fig. 5 im Axialschnitt ein weiteres Ausführungsbeispiel des Tragfedersystems, wobei die Axialschnittebenen des linken und des rechten Teils der Darstellung um 90° in der Lagerachse gegeneinander verdreht sind.

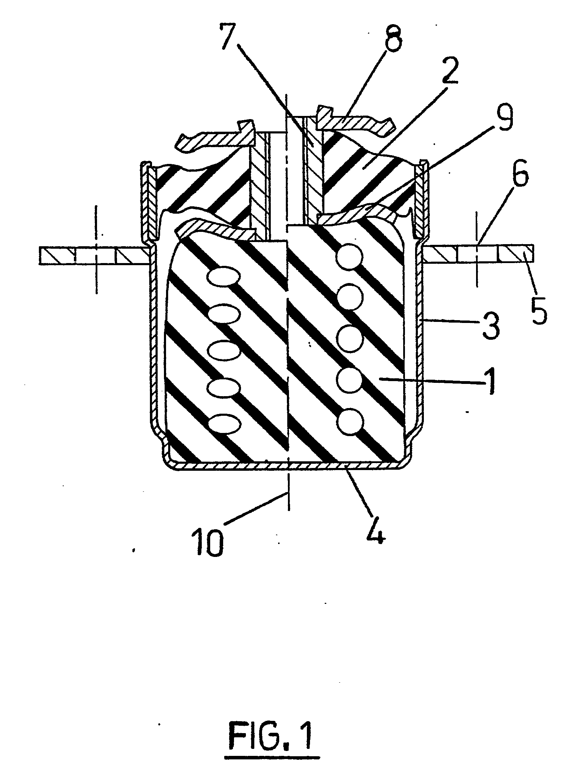

Das in der Fig. 1 schematisch dargestellte Tragfedersystem besteht im wesentlichen aus einer Tragfeder 1 und einer Steuerfeder 2. Die Tragfeder 1 ist ein weicher zylindrischer Lochgummipuffer, der in einem becherförmigen Gehäuse 3 angeordnet ist, dessen Boden 4 als Widerlager für die Tragfeder 1 dient. Das Gehäuse 3 kann beispielsweise mit einem Aussenflansch 5 ausgerüstet sein, der Bohrungen 6 aufweist, über die das Gehäuse 3 mit einem Bezugssystem, beispielsweise einem Maschinenrahmen, fest verbindbar ist.

Die Steuerfeder 2 ist eine zu ihrer horizontalen Hauptebene zumindest im wesentlichen symmetrisch profilierte Gummischeibe, die um eine zentrale Hülse 7 herum, die als Auflastträger des Tragfedersystems dient, dicker als an ihren äusseren Randbereichen ausgebildet ist.

An den beiden Enden der Hülse 7 sind Profilscheiben 8,9 befestigt, die als Federwegbegrenzer für die Steuerfeder 2 dienen.

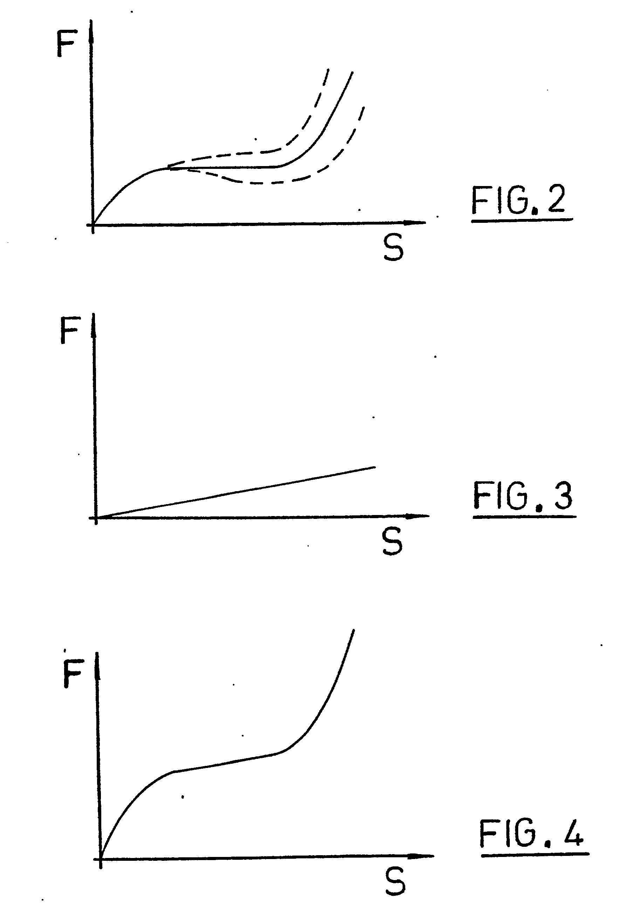

Die Steuerfeder 2 wird als separates Teil vorgefertigt. Im entspannten Zustand weist die Steuerfeder 2 einen Aussendurchmesser auf, der grösser als der Innendurchmesser des Gehäuses 3 an der Stelle ist, an der die Steuerfeder 2 in der aus Fig. 1 ersichtlichen Weise eingesetzt ist. Dies bedeutet, dass die Steuerfeder 2 nach dem Einsetzen in den oberen Rand des Gehäuses 3 radial gestaucht ist. Dieser Verformung weicht die Steuerfeder 2 bei fehlender Behinderung dadurch aus, dass sie sich axial konvex oder konkav durchwölbt, wobei beide Durchwölbungen zu einem betragsmässig gleichen Verformungs-Restspannungsminimum fühen; die in der aus Fig. 1 ersichtlichen Weise radial eingespannte Steuerfeder 2 weist also zwei energetisch gleichwertige stabile Endlagenkonfigurationen auf, ist also "bistabil". Bei der Überführung von der einen in die andere stabile Endlage, beispielsweise also beim Durchdrücken der konvexen Endlage in die konkave Endlage der Steuerfeder 2, wird ein labiler Zwischenbereich durchlaufen, dessen Zentrum durch eine Gleichverteilung der Verformungsspannungen zu beiden Seiten der Hauptebene der eingespannten Steuerfeder 2 gekennzeichnet ist. In diesem Bereich ist die axiale Federkonstante der Steuerfeder 2 praktisch Null. Erst nach Durchschreiten dieses Labilitätsbereiches, der dem Bereich der maximalen Federverformung entspricht, erfolgt eine spontane Rückstellung der Steuerfeder 2 in die zweite stabile Endlage, nämlich in dem hier beschriebenen Funktionsbeispiel in die konkav durchgewölbte Endstellung. Wie dabei die Kennlinie der Steuerfeder 2 im einzelnen verläuft, hängt primär vom Grad der Stauchung der Steuerfeder 2 und sekundär von der Profilierung der Steuerfeder 2 ab. Typische Kennlinienverläufe für eine solche Steuerfeder sind in der Fig. 2 schematisch dargestellt. Dabei entsprechen die mehr oder minder stark negativ ausgeprägten Abschnitte der Kennlinie dem spontanen Rückstellen oder Umklappen der vorgespannten Steuerfeder in die zweite stabile Endlage und die progressiv ansteigenden Kennlinienäste im rechten Teil der Fig. 2 dem konkaven überdehnen der Steuerfeder.

In der Darstellung der Fig. 1 ist die Steuerfeder 2 rechts der Mittellinie 10 in ihrer konvexen stabilen Endlage bei unbelastetem Tragfedersystem dargestellt. Links der Mittellinie 10 ist die Steuerfeder 2 in ihrer labilen Neutrallage bei belastetem Tragfedersystem gezeigt.

Die eigentliche Tragfeder 1 ist ein zylindrischer Lochgummiblock, der in der aus Fig. 1 ersichtlichen Weise bei dem hier beschriebenen Ausführungsbeispiel so dimensioniert ist, dass er nicht oder nur minimal axial vorgespannt mittelbar oder unmittelbar, nämlich unter Zwischenlage der Scheibe 9, an der in ihrer oberen stabilen Endlage entspannten Steuerfeder 2 anliegt. Dabei erkennt der Fachmann ohne weiteres, dass er im einzelnen die Vorspannungen der Federn 1 und 2 nach Massgabe der Anwendungsanforderungen weitgehend beliebig einstellen kann.

Ohne Steuerfeder zeigt der als Tragfeder 1 dienende Lochgummiblock in dem für das in Fig. 1 gezeigte Tragfedersystem ausgenutzten Arbeitsbereich den in Fig. 3 gezeigten Kennlinienverlauf, wobei ebenso wie in der Fig. 2 und wie auch in Fig. 4 F die Federkraft und s den Federweg bedeuten.

Bei einem Zusammenbau und einer Kopplung der Tragfeder 1 und der Steuerfeder 2 in der aus Fig. 1 ersichtlichen Weise addieren sich die Federkennlinie der Tragfeder 1 und der Steuerfeder 2 zu einer resultierenden Kennlinie des Tragfedersystems. Der typische Verlauf einer solchen Kennlinnie für ein Tragfedersystem der in Fig. 1 gezeigten Art ist in der Fig. 4 graphisch dargestellt. Diese Kennlinie ist durch einen extrem weichen, d.h. flach verlaufenden linearen Arbeitsbereich gekennzeichnet, der bei Bedarf sogar noch weicher gestaltet werden kann als ihn die Tragfeder 1 alleine zur Verfügung stellt, der weich in den anschliessenden Progressionsbereich übergeht. Von weit grösserer Bedeutung als der weiche übergang in den Progressionsbereich ist dabei jedoch, dass die extrem weiche lineare Federkennlinie für relativ grosse Kräfte nutzbar ist, und zwar dauerhaft nutzbar ist, da für die Steuerfeder 2 ein mechanisch wesentlich festeres und widerstandsfähigeres Elastomer eingesetzt werden kann, als dies zur Realisierung einer Federkennlinie der in Fig. 3 gezeigten Art für die Tragfeder 1 möglich ist.

Es sei angenommen, dass das in Fig. 1 dargestellte Tragfedersystem in der vorstehend beschriebenen Weise rechts der Mittellinie 10 dem unbelasteten Zustand des Tragfedersystems entspricht. Es sei weiterhin angenommen, dass bei statischer Auflage der abzufedernden Last das Tragfedersystem in die links der Mittellinie 10 in Fig. 1 gezeigte Konfiguration übergeht. Dies würde einem statischen Arbeitspunkt entsprechen, der ungefähr im mittleren Bereich des linearen Abschnitts der in Fig. 4 gezeigten Federkennlinie des Tragfedersystems liegt. Schwingungen, die diese Last relativ zum Widerlager 4 in beiden axialen Richtungen ausführt, können also von dem hier beschriebenen Tragfedersystem ausserordentlich weich abgefedert werden, und zwar bei nur minimaler mechanischer Belastung der eigentlichen Tragfeder 1.

Aufgrund der vorstehenden Beschreibung ist ohne weiteres ersichtlich, dass beispielsweise durch eine Änderung der Abmessungen, Werkstoffeinstellungen für die Federn 1,2 und/oder die im einzelnen zu wählenden Vorspannungen der Arbeitspunkt aus dem mittleren Bereich des linearen Abschnitts der in Fig. 4 gezeigten Kennlinie an dessen linken oder rechten Rand oder sogar über diesen hinaus verschoben werden kann. Wohin solche Arbeitspunkte im einzelnen zu verlegen sind, hängt von den spezifischen Erfordernissen des Anwendungsfalls ab und ist vom Fachmann ohne weiteres auf dem Wege einer routinemässigen Abstimmung des Tragfedersystems realisierbar.

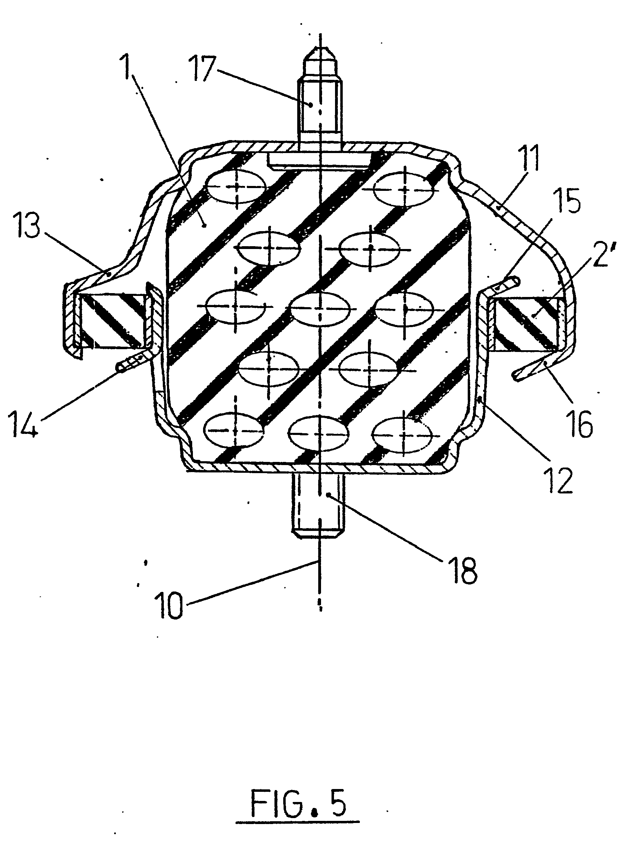

Ein weiteres Ausführungsbeispiel des Tragfedersystems ist schliesslich in der Fig. 5 dargestellt. Der in der Fig. 5 gezeigte Schnitt ist ein Axialschnitt, bei dem die Schnittebene links der Mittellinie und die Schnittebene rechts der in Fig. 5 gezeigten Mittellinie 10 des Lagers um 90° gegeneinander versetzt sind, so dass also, wenn eine der beiden Schnittebenen in der Zeichnungsebene liegt, die jeweils an der Mittellinie angrenzend gegenüberstehende Schnittfläche senkrecht zur Zeichnungsebene steht.

Das Gehäuse des in Fig. 5 gezeigten Lagers besteht aus zwei axial einander gegensinnig öffnender und übergreifender topfartigen oder glockenartigen Teilen, die im folgenden kurz als "auflastseitiges Gehäuseteil" 11 und als "widerlagerseitiges Gehäuseteil" 11 und als "widerlagerseitiges Gehäuseteil" 12 bezeichnet sind.

Die Darstellung der Fig. 5 zeigt das Lager unter Einwirkung einer statischen Auflast, die in der Figur nicht näher dargestellt ist. Insofern entspricht also die in der Fig. 5 gezeigte Darstellung der in Fig. 1 gezeigten Darstellung im Teil links der Mittellinie 10.

Zwischen den einander mit radial ausreichend Spiel axial überlappenden Abschnitten des Lagergehäuses 11,12 ist eine kreisringscheibenförmige Steuerfeder 2' unter radialer Kompression eingespannt. Im gleichen Winkelabstand voneinander und in peripher alternierender Folge sind in den einander überlappenden Gehäuseteilen Federweg-Begrenzungsanschläge 13,14 bzw. 15,16 für die Begrenzung des Steuerfederwegs beim Einschwingen {13,14} bzw. beim Rückschwingen {15,16} des Lagers ausgebildet. Die Anschlagflächen 13,14,15,16 sind jeweils als Schrägflächen ausgebildet, die parallel und komplementär zueinander {13,14; 15,16} so bemessen sind, dass sie einerseits ein übermässiges Durchschlagen oder Durchwölben des labil eingespannten Steuerfederrings verhindern, andererseits kein abruptes anschlagartiges Begrenzen des Steuerfederwegs bewirken, sondern ein allmähliches progressives Ansteigen der Steuerfederkennlinie unter Zugbelastung der Steuerfeder herbeiführen.

Bei dem in Fig. 5 gezeigten Ausführungsbeispiel des Tragfedersystems handelt es sich um ein besonders robust und kompakt ausgebildetes gleichsam gekapseltes Motorlager mit einem Gewindezapfen 17 für den Auflastanschluss, also die Motorbefestigung, und einem Gewindezapfen 18 für den Widerlageranschluss, über den also das Lager mit den den Motorblock oder das Triebwerk tragenden Karosserieteilen verbunden ist.

Im übrigen entsprechen die Ausbildung der Tragfeder und die Abstimmbarkeit der Kennlinien des Lagers den vorstehend im Zusammenhang mit der Fig. 1 ausführlich erläuterten Gegebenheiten.

## Patentansprüche

1. Tragfedersystem mit einer Tragfeder (1) und einer mit der Tragfeder gekoppelten bistabilen Steuerfeder (2), deren beide stabile Endlagen in Richtung der Federauslenkung der Tragfeder übereinanderliegen, wobei der zwischen den beiden stabilen Endlagen liegende labile Neutralpunkt oder Neutralbereich der Steuerfeder (2) im Arbeitsbereich der Tragfeder (1) liegt, dadurch gekennzeichnet, daß die Tragfeder (1) ein Gummipuffer, insbesondere eine weiche Lochgummifeder, ist und daß der freie Federweg der Steuerfeder (2) durch einen oder zwei Federwegbegrenzer (8, 9; 13, 14, 15, 16) begrenzt ist.

2. Tragfedersystem nach Anspruch 1, dadurch gekennzeichnet, daß die Steuerfeder (2) eine radial zur Tragfeder (1) vorgespannte Druck- oder Zugfeder oder eine Druck- oder Zugfederkombination aus mehreren einzelnen Druck- oder Zugfedern, oder eine Tellerfeder ist.

3. Tragfedersystem nach einem der Ansprüche 1 oder 2, dadurch gekennzeichnet, daß die Tragfeder (1) einen Auflastträger (7) aufweist, an den eine unter radialer Kompression mit ortsfestem Widerlager vorgespannte Gummischeibe (2) oder Gummitellerfeder zentral angebunden ist.

4. Tragfedersystem nach Anspruch 3, dadurch gekennzeichnet, daß die Gummisteuerfederscheibe (2) in axialer Richtung mit Aussparungen und/oder durchgehenden Kanälen und/oder durchgehenden Öffnungen versehen ist.

5. Tragfedersystem nach einem der Ansprüche 1 bis 4, dadurch gekennzeichnet, daß der oder die Federwegbegrenzer quer zur Richtung der Federauslenkung der Tragfeder (1) angeordnete und gehaltene plane oder profilierte Anschlagscheiben (8, 9) sind, die am Auflastträger (7) der Tragfeder (1) befestigt sind.

6. Tragfedersystem nach einem der Ansprüche 1 oder 2, mit einem zweiteiligen Lagergehäuse, das teleskopartig ineinandergesteckt sich mit radialem Spiel axial übergreift, dadurch gekennzeichnet, daß eine kreisringscheibenförmige Steuerfeder (2') unter radialer Vorspannung radial ausgerichtet zwischen die beiden axial einander übergreifenden Gehäuseteile eingespannt ist, wobei Anschläge (13, 14, 15, 16) zur Steuerfederwegbegrenzung unmittelbar aus den Gehäuseteilen (11, 12) partiell ausgeformt sind.

7. Tragfedersystem nach Anspruch 6, dadurch gekennzeichnet, daß die Anschlagflächen als Konusmantelsegmentflächen ausgebildet und in alternierender Folge zum Begrenzen des Einschwingvorgangs und des Rückschwingvorgangs mit gleichem Winkelabstand voneinander die Tragfeder (1) umschließend ausgebildet und angeordnet sind.

## Claims

1. A suspension spring system comprising a suspension spring (1) and a bistable control spring (2) coupled to the suspension spring, wherein both stable final positions of said control spring are on top of each other with respect to the direction of the spring deflection path of the suspension spring (1) and wherein the unstable neutral position or neutral range of the control spring (2), which is between the two stable final positions, is within the working range of the suspension spring (1), characterized in that the suspension spring (1) is a rubber buffer, in particular a soft rubber spring with cavities inside, and that the effective spring stroke of the control spring (2) is limited by one or two end stop means (8, 9; 13, 14, 15, 16).

2. A suspension spring according to claim 1, characterized in that the control spring (2) is a tension spring or a pressure spring radially prestressed with respect to the suspension spring (1) or a pressure or tension spring system consisting of several pressure or tension springs or a disk spring.

3. A suspension spring system according to claim 1 or 2, characterized in that the suspension spring (1) comprises a load supporting member (7) coupled centrally to a rubber disk (2) or a rubber disk spring radially prestressed under compression with respect to a stationary load transferring member.

4. A suspension spring system according to claim 3, characterized in that the disk-typ rubber control spring (2) comprises axially extending cavities and/or channels open to both sides and/or openings open to both sides.

5. A suspension spring system according to one of the claims 1 to 4, characterized in that the one or both end stop means limiting the spring stroke are formed by plane or profiled disk-type end stop means (8, 9) arranged transversely to the direction of the spring deflection path of the suspension spring (1), which end stop means (8, 9) are attached to the load supporting member (7) of the suspension spring (1).

6. A suspension spring system according to claim 1 or 2, comprising a housing formed by two housing parts which are axially put into each other telescopically allowing a certain radial free motion, characterized in that an annular disk-typ control spring (2') is fixed radially and radially prestressed between the two housing parts overlapping each other axially, wherein end stop means (13, 14, 15, 16) limiting the spring stroke of the control spring are formed integrally and partially with the housing parts (11, 12).

7. A suspension spring system according to claim 6, characterized in that the surface areas acting as end stop means are conically segmented surface areas, which are arranged alternatingly uniformly angularly spaced enclosing the suspension spring (1) for limiting the positive and negative deflection range.

## Revendications

1. Système de ressort porteur comportant un ressort porteur (1) et un ressort de contrôle (2), bistable, couplé avec le ressort porteur, et dont les deux positions de fin de course stables se trouvent l'une au dessus de l'autre suivant la direction de la course du ressort porteur, tandis que le point neutre, instable, situé entre les deux positions stables, ou la zone neutre, du ressort de contrôle (2) se trouve dans la zone de travail du ressort porteur (1), caractérisé en ce que le ressort porteur (1) est un tampon de caoutchouc, en particulier un ressort mou en caoutchouc à perforations et en ce que la course libre du ressort de contrôle (2) est limitée par un ou deux limiteurs de course (8, 9, 13, 14, 15, 16).

2. Système de ressort porteur suivant la revendication 1, caractérisé en ce que le ressort de contrôle (2) est un ressort de compression, ou un ressort de traction, ou une combinaison de ressorts de compression ou de traction composée de plusieurs ressorts séparés, de compression ou de traction, ou bien est un disque-ressort.

3. Système de ressort porteur suivant la revendication 1 ou la revendication 2, caractérisé en ce que le ressort porteur (1) présente une pièce de reprise de la charge (7), à laquelle est lié, au centre, un disque de caoutchouc (2), ou une rondelle-ressort de caoutchouc, soumis à une contrainte préalable sous une compression radiale avec un contre-appui fixe.

4. Système de ressort porteur suivant la revendication 3, caractérisé en ce que le disque du ressort de contrôle en caoutchouc est, suivant la direction axiale, prévu avec des évidements et/ou des canaux traversants et/ou des ouvertures traversantes.

5. Système de ressort porteur suivant l'une quelconque des revendications 1 à 4, caractérisé en ce que le ou les limiteurs de course de ressort sont des disques de butée (8, 9), plans ou profilés, disposés et maintenus perpendiculairement à la direction de la course du ressort porteur (1), et qui sont fixés sur la pièce de reprise de la charge (7) du ressort porteur (1).

6. Système de ressort porteur suivant l'une des revendications 1 ou 2, comportant un boîtier d'appui en deux parties, qui s'emboîtent axialement avec un jeu radial, en s'enfonçant télescopiquement l'une dans l'autre, caractérisé en ce qu'un ressort de contrôle (2') en forme de disque ayant la forme d'un anneau circulaire, soumis à une contrainte préalable radiale, est enfoncé et mis sous contrainte en direction radiale, entre les deux parties du boîtier s'emboîtant l'une dans l'autre axialement, tandis que des butées (13, 14, 15, 16) pour limiter la course du ressort de contrôle sont réalisées par formage directement à partir des parties (11, 12) du boîtier.

7. Système de ressort porteur suivant la revendication 6, caractérisé en ce que les surfaces de butée sont réalisées comme des segments de surfaces de cônes et sont réalisées et disposées, avec la même distance angulaire les unes des autres, de façon à entourer les ressorts porteurs (1) pour limiter alternativement le débattement d'oscillation aller et le débattement d'oscillation retour.

FIG. 1

EP 0 269 890 B1

FIG. 2

FIG. 3

FIG. 4

FIG. 5